# EUROPEAN PATENT APPLICATION

(11) **EP 4 749 215 A1**
(43) Date of publication of application: **27.05.2026**
(21) Application number: 24865140.8
(22) Date of filing: 09.08.2024
(51) Int. Cl.: F25D 23/00, A01F 25/00, F25D 11/00

(54) **AIR COMPOSITION ADJUSTMENT DEVICE, REFRIGERATION DEVICE, AND STORAGE**

(30) Priority: 15.09.2023 JP 2023150117
(71) Applicant: Daikin Industries, Ltd., Osaka-shi, Osaka 530-0001 (JP)
(72) Inventor: HIRATA, Wataru, Osaka-shi, Osaka 530-0001 (JP); WAKAZONO, Naoki, Osaka-shi, Osaka 530-0001 (JP); IKEMIYA, Makoto, Osaka-shi, Osaka 530-0001 (JP)
(74) Representative: Hoffmann Eitle
(86) International application number: PCT/JP2024/028664
(87) International publication number: WO 2025/057634

(57) **Abstract**

An air composition adjustment apparatus (90) includes a composition adjustment unit (100), an air supply unit (40), and a controller (110). The composition adjustment unit (100) supplies a treated gas having a composition different from that of outside air to a storage (2). The air supply unit (40) supplies the outside air to the storage (2). The controller (110) performs a dual-operation mode. In the dual-operation mode, the controller (110) causes the air supply unit (40) to supply the outside air to the storage (2) and causes the composition adjustment unit (100) to supply the treated gas to the storage (2).

## Description

### TECHNICAL FIELD

The present disclosure relates to an air composition adjustment apparatus, a refrigeration apparatus, and a storage.

### BACKGROUND ART

Patent Document 1 discloses an inside air control apparatus for controlling a composition of inside air in a transportation container. In order to maintain freshness of fruits, vegetables, and the like stored in the transportation container which is a storage, the inside air control apparatus adjusts a concentration of oxygen and a concentration of carbon dioxide in inside air. The inside air control apparatus processes outside air to generate a treated gas having a composition different from that of the outside air, and supplies the treated gas to the inside space. The inside air control apparatus also operates to supply outside air to the inside space.

### CITATION LIST

### PATENT DOCUMENT

Patent Document 1: Japanese Unexamined Patent Publication No. 2018-148877

### SUMMARY OF THE INVENTION

### TECHNICAL PROBLEM

Respiration amounts of fruits and vegetables stored in the storage vary depending on kinds and states of the fruits and vegetables. For example, when the respiration amounts of fruits and vegetables are large, the amount of carbon dioxide generated by breathing of the fruits and vegetables is also large. Thus, the carbon dioxide concentration of the inside air cannot be reduced to a target value by operation of the inside air control apparatus, and there is a possibility that the inside air cannot be adjusted to a composition suitable for keeping freshness of the fruits and vegetables.

An object of the present disclosure is to appropriately adjust the composition of inside air.

### SOLUTION TO THE PROBLEM

A first aspect of the present disclosure is directed to an air composition adjustment apparatus (90) that adjusts a composition of inside air inside a storage (2), the air composition adjustment apparatus including a composition adjustment unit (100) that generates a treated gas having a composition different from a composition of outside air by treating the outside air, and supplies the treated gas to the storage (2), an air supply unit (40) that supplies the outside air to the storage (2), and a controller (110) that controls the composition adjustment unit (100) and the air supply unit (40), in which the controller (110) performs a dual-operation mode in which the air supply unit (40) supplies the outside air to the storage (2) and the composition adjustment unit (100) supplies the treated gas to the storage (2).

In the first aspect, the controller (110) performs a dual-operation mode. The dual-operation mode is a control mode in which the air supply unit (40) supplies the outside air to the storage (2) and the composition adjustment unit (100) supplies the treated gas to the storage (2). The carbon dioxide concentration of the outside air is substantially the same as the carbon dioxide concentration of the atmosphere, and is very low. The carbon dioxide concentration of the treated gas generated by treating the outside air is also very low, similarly to the carbon dioxide concentration of the outside air. Therefore, when the air supply unit (40) supplies the outside air to the storage (2) and the composition adjustment unit (100) supplies the treated gas to the storage (2), the carbon dioxide concentration of the inside air of the storage (2) is reduced as compared with the case where one of the air supply unit (40) and the composition adjustment unit (100) is activated and the other is stopped. As a result, even when the respiration amounts of fruits and vegetables stored in storage (2) are large, the composition of the inside air can be appropriately adjusted.

A second aspect of the present disclosure is an embodiment of the first aspect. In the second aspect, the treated gas generated by the composition adjustment unit (100) contains a low oxygen concentration gas having an oxygen concentration lower than an oxygen concentration of the outside air, and the controller (110) causes the composition adjustment unit (100) to supply the low oxygen concentration gas to the storage (2) in the dual-operation mode.

The controller (110) of the second aspect causes the composition adjustment unit (100) to supply the low oxygen concentration gas to the storage (2) in the dual-operation mode. Therefore, as compared with the case where both the composition adjustment unit (100) and the air supply unit (40) supply the outside air to the storage, the amount of oxygen introduced into the storage (2) is reduced in a state where the controller (110) executes the dual-operation mode.

A third aspect of the present disclosure is an embodiment of the first or second aspect. In the third aspect, the air composition adjustment apparatus (90) further includes a detector (160) that detects a concentration of one or more components of the inside air, in which the controller (110) performs a single-operation mode in which the controller (110) controls an operation of the composition adjustment unit (100) based on a value detected by the detector (160) in a state where supply of the outside air to the storage (2) by the air supply unit (40) is stopped, and switches between the single-operation mode and the dual-operation mode based on a detection value of the detector (160).

In the third aspect, the controller (110) switches the control mode to execute from one to the other of the single-operation mode and the dual-operation mode based on the detection value of the detector (160). Therefore, the composition of the inside air can be appropriately adjusted as compared with a case where only one of the single-operation mode and the dual-operation mode is performed.

A fourth aspect of the present disclosure is an embodiment of the third aspect. In the fourth aspect, the detector (160) includes an oxygen sensor (161) that detects an oxygen concentration of the inside air and a carbon dioxide sensor (162) that detects a carbon dioxide concentration of the inside air, and the controller (110) ends the single-operation mode and executes the dual-operation mode when a detection value of the oxygen sensor (161) is lower than a first predetermined value and a detection value of the carbon dioxide sensor (162) is higher than a second predetermined value during execution of the single-operation mode.

In the fourth aspect, when the detection value of the oxygen sensor (161) is lower than the first predetermined value and the detection value of the carbon dioxide sensor (162) is higher than the second predetermined value, the controller (110) switches the control mode to be executed from the single-operation mode to the dual-operation mode. Therefore, the composition of the inside air can be appropriately adjusted as compared with a case where only one of the single-operation mode and the dual-operation mode is performed.

A fifth aspect of the present disclosure is an embodiment of the fourth aspect. In the fifth aspect, the air supply unit (40) is capable of changing a flow rate of the outside air supplied to the storage (2), and the controller (110) increases the flow rate of the outside air supplied to the storage (2) by the air supply unit (40) when the detection value of the oxygen sensor (161) decreases during execution of the dual-operation mode.

In a case where the detection value of the oxygen sensor (161) decreases in a state where the controller (110) executes the dual-operation mode, it is estimated that the amount of oxygen supplied to the storage (2) is smaller than the amount of oxygen consumed by breathing of fruits and vegetables in the storage (2). Therefore, the controller (110) of the fifth aspect increases the flow rate of the outside air supplied to the storage (2) by the air supply unit (40) when the detection value of the oxygen sensor (161) decreases during execution of the dual-operation mode. As a result, a decrease in the oxygen concentration of the inside air is suppressed.

A sixth aspect of the present disclosure is an embodiment of the fourth aspect. In the sixth aspect, the air supply unit (40) is capable of changing the flow rate of the outside air supplied to the storage (2), and the controller (110) reduces the flow rate of the outside air supplied to the storage (2) by the air supply unit (40) when a rising speed of the detection value of the oxygen sensor (161) is higher than a third predetermined value during execution of the dual-operation mode.

In a case where the rising speed of the detection value of the oxygen sensor (161) is high in a state where the controller (110) executes the dual-operation mode, it is estimated that the amount of oxygen supplied to the storage (2) is larger than the amount of oxygen consumed by breathing of fruits and vegetables in the storage (2). Therefore, the controller (110) of the sixth aspect reduces the flow rate of the outside air supplied to storage (2) by the air supply unit (40) when the rising speed of the detection value of the oxygen sensor (161) is high during execution of the dual-operation mode. As a result, an increase in the oxygen concentration of the inside air is suppressed.

A seventh aspect of the present disclosure is an embodiment of any one of the fourth to sixth aspects. In the seventh aspect, when the detection value of the oxygen sensor (161) is higher than a fourth predetermined value or when the detection value of the carbon dioxide sensor (162) is lower than a fifth predetermined value during execution of the dual-operation mode, the controller (110) ends the dual-operation mode and executes the single-operation mode, and the fourth predetermined value is higher than the first predetermined value, and the fifth predetermined value is lower than the second predetermined value.

In the seventh aspect, when the detection value of the oxygen sensor (161) is higher than the fourth predetermined value, or when the detection value of the carbon dioxide sensor (162) is lower than the fifth predetermined value, the controller (110) switches the control mode to be executed from the dual-operation mode to the single-operation mode.

An eighth aspect of the present disclosure is an embodiment of the fifth or sixth aspect. In the eighth aspect, the air supply unit (40) includes an air introduction port (41a) having a variable opening degree through which outside of the storage (2) communicates with inside of the storage (2), and the controller (110) increases the flow rate of the outside air supplied to the storage (2) by the air supply unit (40) by increasing an opening degree of the air introduction port (41a), and reduces the flow rate of the outside air supplied to the storage (2) by the air supply unit (40) by reducing the opening degree of the air introduction port (41a).

The controller (110) of the eighth aspect changes the flow rate of the outside air supplied to the storage (2) by the air supply unit (40) by changing the opening degree of the air introduction port (41a).

A ninth aspect of the present disclosure is an embodiment of the fifth or sixth aspect. In the ninth aspect, the air supply unit (40) includes an internal fan (35) that circulates the inside air inside the storage (2), and an air introduction port (41a) that allows communication between outside of the storage (2) and a suction-side region of the internal fan (35) inside the storage (2), and the controller (110) increases the flow rate of the outside air supplied to the storage (2) by the air supply unit (40) by increasing a rotational speed of the internal fan (35), and reduces the flow rate of the outside air supplied to the storage (2) by the air supply unit (40) by reducing the rotational speed of the internal fan (35).

When the rotational speed of the internal fan (35) changes, the pressure in the suction-side region of the internal fan (35) inside the storage (2) changes, and the flow rate of the outside air flowing into the storage (2) from the outside through the air introduction port (41a) changes. Therefore, the controller (110) of the ninth aspect changes the flow rate of the outside air supplied to the storage (2) by the air supply unit (40) by changing the rotational speed of the internal fan (35).

A tenth aspect of the present disclosure is an embodiment of any one of the third to ninth aspects. In the tenth aspect, the composition adjustment unit (100) is capable of executing an adjustment operation of supplying the treated gas to the storage (2) and an air introduction operation of supplying the outside air to the storage (2), and in the single-operation mode, the controller (110) switches a state in which the composition adjustment unit (100) performs the adjustment operation, a state in which the composition adjustment unit (100) performs the air introduction operation, and a state in which the composition adjustment unit (100) pauses without performing the adjustment operation and the air introduction operation based on a value detected by the detector (160).

The controller (110) of the tenth aspect switches the composition adjustment unit (100) to the state of performing the gas supply operation, the state of performing the air introduction operation, and the state of pausing without performing the gas supply operation and the air introduction operation based on the value detected by the detector (160).

An eleventh aspect of the present disclosure is an embodiment of the third aspect. In the eleventh aspect, the detector (160) includes an oxygen sensor (161) that detects an oxygen concentration of the inside air, the controller (110) is capable of executing an oxygen concentration reduction mode in which the controller (110) controls an operation of the composition adjustment unit (100) so that a detection value of the oxygen sensor (161) decreases from the oxygen concentration of the outside air to a sixth predetermined value in a state where the supply of the outside air to the storage (2) by the air supply unit (40) is stopped, and a composition maintenance mode in which the controller (110) controls operations of the composition adjustment unit (100) and the air supply unit (40) in order to maintain the composition of the inside air after an end of the oxygen concentration reduction mode, and the controller (110) performs the dual-operation mode during execution of the composition maintenance mode.

In the eleventh aspect, the controller (110) sequentially executes the oxygen concentration reduction mode and the composition maintenance mode. Further, the controller (110) performs the dual-operation mode during execution of the composition maintenance mode. In the dual-operation mode, the controller (110) causes the air supply unit (40) to supply the outside air to the storage (2) and causes the composition adjustment unit (100) to supply the treated gas to the storage (2).

A twelfth aspect of the present disclosure is an embodiment of the first aspect. In the twelfth aspect, the treated gas includes a first gas having a higher nitrogen concentration and a lower oxygen concentration than the outside air and a second gas having a lower nitrogen concentration and a higher oxygen concentration than the outside air, and the composition adjustment unit (100) includes an air treatment unit (95) that separates the outside air into the first gas and the second gas.

In the twelfth aspect, the air treatment unit (95) of the composition adjustment unit (100) separates the outside air into the first gas and the second gas.

A thirteenth aspect of the present disclosure is an embodiment of the twelfth aspect. In the thirteenth aspect, the air treatment unit (95) of the composition adjustment unit (100) includes an adsorbent that adsorbs nitrogen, and the composition adjustment unit (100) performs an operation of generating the second gas by adsorbing nitrogen contained in the outside air to the adsorbent of the air treatment unit (95) and an operation of generating the first gas by desorbing nitrogen from the adsorbent of the air treatment unit (95).

In the thirteenth aspect, the air treatment unit (95) of the composition adjustment unit (100) separates the outside air into the first gas and the second gas using an adsorbent that adsorbs nitrogen.

A fourteenth aspect of the present disclosure is directed to a refrigeration apparatus (10) including the air composition adjustment apparatus (90) of any one of the first to thirteenth aspects, and a refrigerant circuit (11) that performs a refrigeration cycle to adjust a temperature of the inside air.

The refrigeration apparatus (10) of the fourteenth aspect adjusts the composition of the inside air by the operation of the air composition adjustment apparatus (90), and adjusts the temperature of the inside air by the operation of the refrigerant circuit (11).

A fifteenth aspect of the present disclosure is directed to a storage (2) including the refrigeration apparatus (10) of the fourteenth aspect.

The storage (2) of the fifteenth aspect includes a refrigeration apparatus (10) including the air composition adjustment apparatus (90) and the refrigerant circuit (11).

### BRIEF DESCRIPTION OF THE DRAWINGS

FIG. 1 is a schematic perspective view of a transportation refrigeration apparatus of an embodiment.
FIG. 2 is a cross-sectional view of a transportation container including the transportation refrigeration apparatus of the embodiment.
FIG. 3 is a piping system diagram illustrating a refrigerant circuit of a transportation refrigeration apparatus of the embodiment.
FIG. 4 is a schematic front view of a ventilation apparatus. FIG. 4(A) illustrates a state in which an opening and closing lid is at a closed position, FIG. 4(B) illustrates a state in which the opening and closing lid is at an intermediate position, and FIG. 4(C) illustrates a state in which the opening and closing lid is at a fully open position.
FIG. 5 is a piping system diagram illustrating a configuration of an inside air control apparatus of the embodiment.
FIG. 6 corresponds to FIG. 5 and is a diagram of the inside air control apparatus performing a first operation of a gas supply operation.
FIG. 7 corresponds to FIG. 5 and is a diagram of the inside air control apparatus performing a second operation of the gas supply operation.
FIG. 8 corresponds to FIG. 5 and is a diagram of the inside air control apparatus performing an air introduction operation.
FIG. 9 is a block diagram illustrating a configuration of a controller of an air composition adjustment apparatus of the embodiment.
FIG. 10 is a flowchart illustrating an operation performed by the controller of the embodiment.

### DESCRIPTION OF EMBODIMENTS

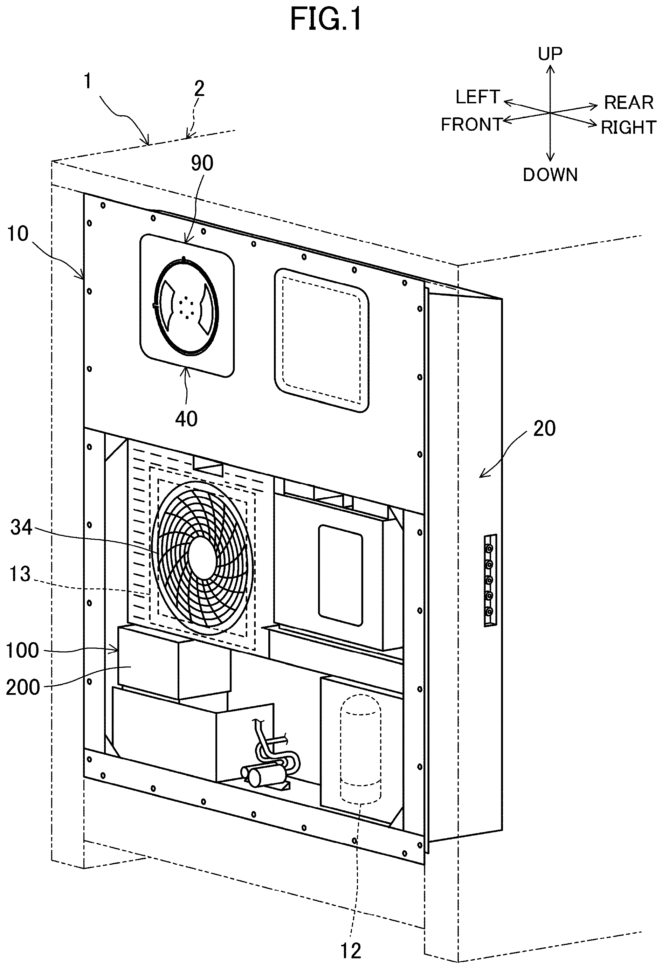

An embodiment of the present disclosure will be described below with reference to the drawings. In the following description, phrases related to the terms "front", "rear", "up", "down", "right", and "left" are based on the directions indicated by the arrows in FIG. 1.

The present disclosure relates to a transportation container (1). The transportation container (1) is a reefer container capable of controlling an internal temperature. The transportation container (1) is used to transport fresh products (e.g., fruits, vegetables, flowers, and ornamental plants) which breathe by absorbing oxygen (O₂) in the air and releasing carbon dioxide (CO₂) into the air.

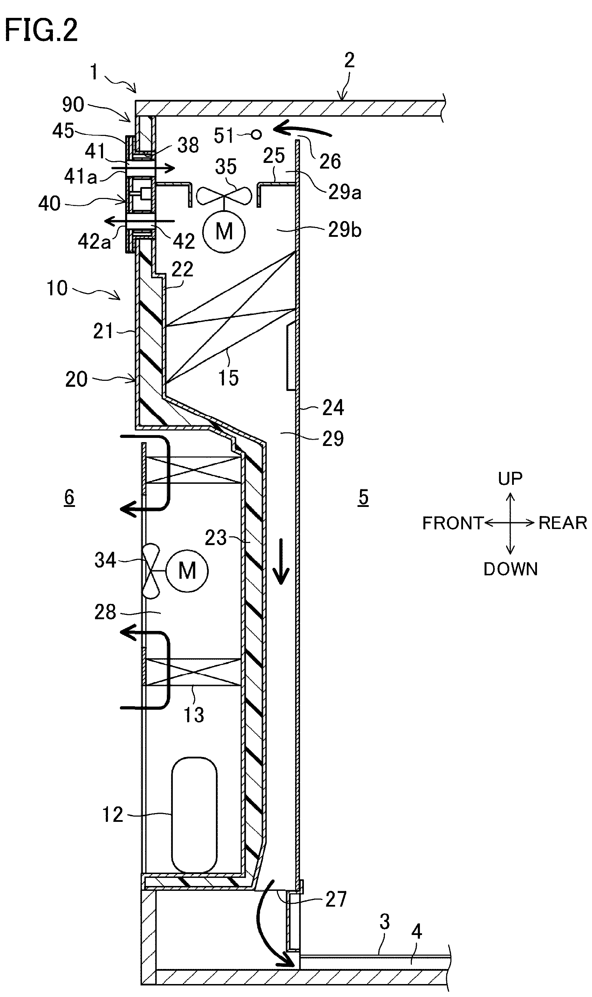

As illustrated in FIGS. 1 and 2, the transportation container (1) includes a container body (2) and a transportation refrigeration apparatus (10). The transportation refrigeration apparatus (10) is attached to the container body (2). The transportation container (1) is used for marine transportation. The transportation container (1) is conveyed by a marine transporter such as a ship.

### -Container Body-

The container body (2) is a storage for storing the above fresh products.

The container body (2) has a hollow box shape. The container body (2) is horizontally long. The container body (2) has an opening formed at one end in the longitudinal direction. The opening of the container body (2) is blocked by the transportation refrigeration apparatus (10). The container body (2) contains a storage space (5) for storing cargos, which are fresh products.

The storage space (5) has a bottom portion where a floorboard (3) on which cargos are to be placed is disposed. An underfloor path (4) through which air blown from the transportation refrigeration apparatus (10) passes is formed between the floorboard (3) and a bottom plate of the container body (2). The underfloor path (4) extends along the bottom plate of the container body (2) in the longitudinal direction of the container body (2). The underfloor path (4) has ends, one of which is connected to a blowout port (27) of the transportation refrigeration apparatus (10) and the other one of which communicates with a space above the floorboard (3) (i.e., the space where the cargos are stored).

### -Transportation Refrigeration Apparatus-

The transportation refrigeration apparatus (10) includes a casing (20), a refrigerant circuit (11) that performs a refrigeration cycle, an external fan (34), and an internal fan (35).

### <Casing>

The casing (20) includes an external wall (21), an internal wall (22), a backboard (24), and a partition board (25). As will be described later, the casing (20) is provided with the refrigerant circuit (11), the external fan (34), and the internal fan (35).

The external wall (21) is a plate-shaped member disposed to cover the open end of the container body (2). The external wall (21) has a lower portion protruding toward the inside of the container body (2). The internal wall (22) is a plate-shaped member formed along the external wall (21). The internal wall (22) is disposed to cover a surface of the external wall (21) facing the inside of the container body (2). The space between the external wall (21) and the internal wall (22) is filled with a thermal insulator (23).

The casing (20) has a lower portion recessed toward the inside of the container body (2). The lower portion of the casing (20) forms an external equipment room (28) communicating with a space outside the transportation container (1). The external fan (34) is disposed in the external equipment room (28).

The backboard (24) is a member having a substantially rectangular flat plate shape. The backboard (24) is disposed closer to the inside of the container body (2) than the internal wall (22) is. An inside air flow path (29) is formed between the backboard (24) and the internal wall (22). The inside air flow path (29) has an upper end forming an intake port (26) of the casing (20) and has a lower end forming the blowout port (27) of the casing (20).

The partition board (25) is a plate-shaped member disposed to partition the inside air flow path (29) into upper and lower sections. The partition board (25) is disposed in an upper portion of the inside air flow path (29). The partition board (25) partitions the inside air flow path (29) into a primary flow path (29a) above the partition board (25) and a secondary flow path (29b) below the partition board (25). The primary flow path (29a) communicates with the storage space (5) via the intake port (26). The secondary flow path (29b) communicates with the underfloor path (4) via the blowout port (27). The internal fan (35) is attached to the partition board (25). The internal fan (35) is disposed to blow air sucked from the primary flow path (29a) to the secondary flow path (29b).

### <Refrigerant Circuit>

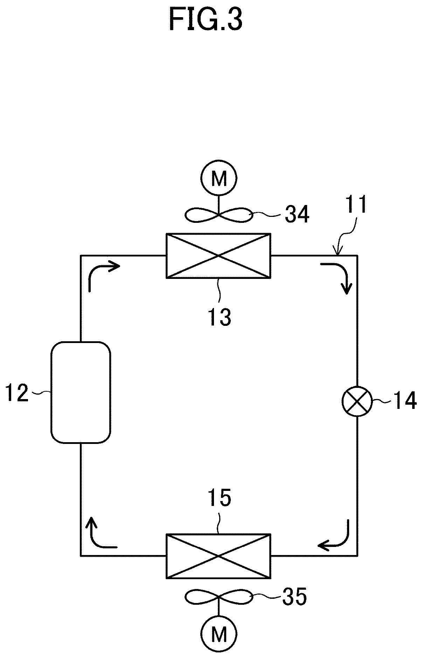

As illustrated in FIG. 3, the refrigerant circuit (11) is a closed circuit in which a compressor (12), an external heat exchanger (13), an expansion valve (14), and an internal heat exchanger (15) are connected through piping. When the compressor (12) is actuated, a refrigerant circulates through the refrigerant circuit (11) to perform a vapor compression refrigeration cycle. As illustrated in FIG. 2, the external heat exchanger (13) is disposed in the external equipment room (28), and the internal heat exchanger (15) is disposed in the secondary flow path (29b) of the inside air flow path (29). The compressor (12) is disposed in the external equipment room (28).

### -Operation of Transportation Refrigeration Apparatus-

The transportation refrigeration apparatus (10) performs a cooling operation for cooling inside air in the transportation container (1).

In the cooling operation, the compressor (12) of the refrigerant circuit (11) operates to circulate the refrigerant through the refrigerant circuit (11), thereby performing a vapor compression refrigeration cycle. In the refrigerant circuit (11), the refrigerant discharged from the compressor (12) passes through the external heat exchanger (13), the expansion valve (14), and the internal heat exchanger (15) in sequence, and then is sucked into and compressed in the compressor (12).

In the cooling operation, the external fan (34) and the internal fan (35) operate. When the external fan (34) operates, the outside air outside of the transportation container (1) is sucked into the external equipment room (28) and pass through the external heat exchanger (13). In the external heat exchanger (13), the refrigerant dissipates heat to the outside air and then condenses. When the internal fan (35) operates, the inside air in the storage space (5) of the transportation container (1) is sucked into the inside air flow path (29) and passes through the internal heat exchanger (15). In the internal heat exchanger (15), the refrigerant absorbs heat from the inside air and then evaporates.

The flow of the inside air will be described below. The inside air present in the storage space (5) flows into the primary flow path (29a) of the inside air flow path (29) through the intake port (26), and then is blown to the secondary flow path (29b) by the internal fan (35). The inside air having flowed into the secondary flow path (29b) is cooled when passing through the internal heat exchanger (15). Thereafter, the cooled air is blown to the underfloor path (4) through the blowout port (27), and then flows into the storage space (5) through the underfloor path (4).

In the inside air flow path (29), the primary flow path (29a) is located on the suction side of the internal fan (35), and the secondary flow path (29b) is located on the discharge side of the internal fan (35). Thus, during operation of the internal fan (35), the air pressure in the secondary flow path (29b) is slightly higher than the air pressure in the primary flow path (29a).

### -Air Composition Adjustment Apparatus-

The transportation refrigeration apparatus (10) includes an air composition adjustment apparatus (90). The air composition adjustment apparatus (90) includes a ventilation apparatus (40), an inside air control apparatus (100), and a controller (110).

The ventilation apparatus (40) is an air supply unit that supplies atmosphere, which is outside air, to the storage space (5) of the storage (2). The ventilation apparatus (40) can change a flow rate of outside air supplied to the storage space (5).

The inside air control apparatus (100) processes atmospheric air, which is outside air, to generate a treated gas having a composition different from that of the outside air. The inside air control apparatus (100) is a composition adjustment unit that supplies the generated treated gas to the storage space (5) of the storage (2).

### -Ventilation Apparatus-

The ventilation apparatus (40) will be described. The ventilation apparatus (40) ventilates the storage space (5) of the container body (2). The ventilation apparatus (40) has a function of supplying the outside air to the storage space (5) and a function of discharging the inside air to an external space (6).

### <Configuration of Ventilation Apparatus>

As illustrated in FIG. 1, the ventilation apparatus (40) is disposed in an upper left portion of a casing (20) of the transportation refrigeration apparatus (10). As illustrated in FIG. 2, the ventilation apparatus (40) is provided in a ventilation apparatus attachment port (38) formed in the casing (20). The ventilation apparatus attachment port (38) penetrates the casing (20) in the front-rear direction.

As illustrated in FIG. 2, an air supply passage (41) and an air discharge passage (42) are formed inside the ventilation apparatus (40). The air supply passage (41) and the air discharge passage (42) make the storage space (5) and the external space (6) communicate with each other.

Specifically, the air supply passage (41) allows the primary flow path (29a) of the inside air flow path (29) to communicate with the external space (6). An end of the air supply passage (41) on the side of the external space (6) is an air supply communication port (41a). The air supply communication port (41a) is an air introduction port that allows the external space (6) to communicate with the inside of the container body (2). The air discharge passage (42) allows the secondary flow path (29b) of the inside air flow path (29) to communicate with the external space (6). An end of the air discharge passage (42) on the side of the external space (6) is an air discharge communication port (42a). The air supply communication port (41a) and the air discharge communication port (42a) are slightly elongated openings extending in the circumferential direction.

The ventilation apparatus (40) includes an opening and closing lid (45). The opening and closing lid (45) is a disk-shaped member. The opening and closing lid (45) is provided so as to cover the air supply communication port (41a) and the air discharge communication port (42a). The opening and closing lid (45) is driven by a motor (not illustrated) and is rotatable around a center axis thereof.

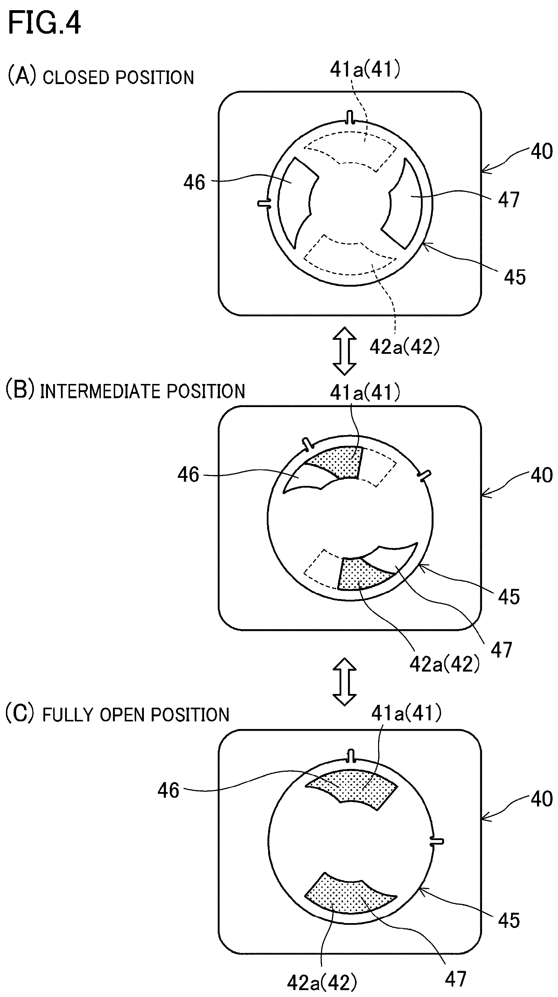

As illustrated in FIG. 4, in the opening and closing lid (45), an air supply opening (46) and an air discharge opening (47) are formed. Each of the air supply opening (46) and the air discharge opening (47) penetrates the opening and closing lid (45) in the thickness direction. The shape of the air supply opening (46) is the same as the shape of the air supply communication port (41a). The shape of the air discharge opening (47) is the same as the shape of the air discharge communication port (42a). In the opening and closing lid (45), the air supply opening (46) and the air discharge opening (47) are formed at positions such that the entire air discharge opening (47) overlaps the air discharge communication port (42a) when the entire air supply opening (46) overlaps the air supply communication port (41a).

### <Operation of Ventilation Apparatus>

The ventilation apparatus (40) is configured to be able to adjust a flow rate (supply air flow rate) of the outside air supplied to the storage space (5) and a flow rate (exhaust air flow rate) of the inside air discharged from the storage space (5) by rotationally moving the opening and closing lid (45).

Specifically, when the opening and closing lid (45) is rotationally moved, an area of a portion of the air supply communication port (41a) overlapping the air supply opening (46) and an area of a portion of the air discharge communication port (42a) overlapping the air discharge opening (47) change. The outside air flows into the air supply passage (41) through a portion of the air supply communication port (41a) overlapping with the air supply opening (46), and then flows into the storage space (5). The inside air flowing through the air discharge passage (42) flows out to the external space (6) through the portion of the air discharge communication port (42a) overlapping with the air discharge opening (47).

Therefore, when the area of the portion of the air supply communication port (41a) overlapping the air supply opening (46) is increased, the supply air flow rate increases, and when the area of the portion is reduced, the supply air flow rate decreases. When the area of the portion of the air discharge communication port (42a) overlapping the air discharge opening (47) is increased, the exhaust air flow rate is increased, and when the area of the portion is decreased, the exhaust air flow rate is decreased.

When the opening and closing lid (45) is at the position illustrated in FIG. 4(A), the entire air supply communication port (41a) is covered with the opening and closing lid (45), and the entire air discharge communication port (42a) is covered with the opening and closing lid (45). Thus, each of the area of the portion of the air supply communication port (41a) overlapping the air supply opening (46) and the area of the portion of the air discharge communication port (42a) overlapping the air discharge opening (47) becomes zero. That is, the air supply passage (41) and the air discharge passage (42) are fully closed. Therefore, in this state, each of the supply air flow rate and the exhaust air flow rate becomes zero.

When the opening and closing lid (45) is at the position illustrated in FIG. 4(C), the entire air supply communication port (41a) overlaps the air supply opening (46), and the entire air discharge communication port (42a) overlaps the air discharge opening (47). Therefore, the area of the portion of the air supply communication port (41a) overlapping the air supply opening (46) (a portion denoted by a dot in FIG. 4(C)) and the area of the portion of the air discharge communication port (42a) overlapping the air discharge opening (47) (a portion denoted by a dot in FIG. 4(C)) are maximum. Thus, the air supply passage (41) and the air discharge passage (42) are fully opened. Therefore, in this state, each of the supply air flow rate and the exhaust air flow rate becomes the maximum flow rate.

When the opening and closing lid (45) is at the position illustrated in FIG. 4(B), a part of the air supply communication port (41a) overlaps the air supply opening (46), and a part of the air discharge communication port (42a) overlaps the air discharge opening (47). Therefore, the area of the portion of the air supply communication port (41a) overlapping the air supply opening (46) (a portion denoted by a dot in FIG. 4(B)) and the area of the portion of the air discharge communication port (42a) overlapping the air discharge opening (47) (a portion denoted by a dot in FIG. 4(B)) are intermediate areas smaller than the maximum. Therefore, in this state, each of the supply air flow rate and the exhaust air flow rate becomes an intermediate flow rate larger than zero and smaller than the maximum flow rate.

### -Inside Air Control Apparatus-

The inside air control apparatus (100) is provided in the transportation refrigeration apparatus (10) to provide so-called controlled atmosphere (CA) transportation. The inside air control apparatus (100) adjusts a composition of air in the storage space (5) of the transportation container (1).

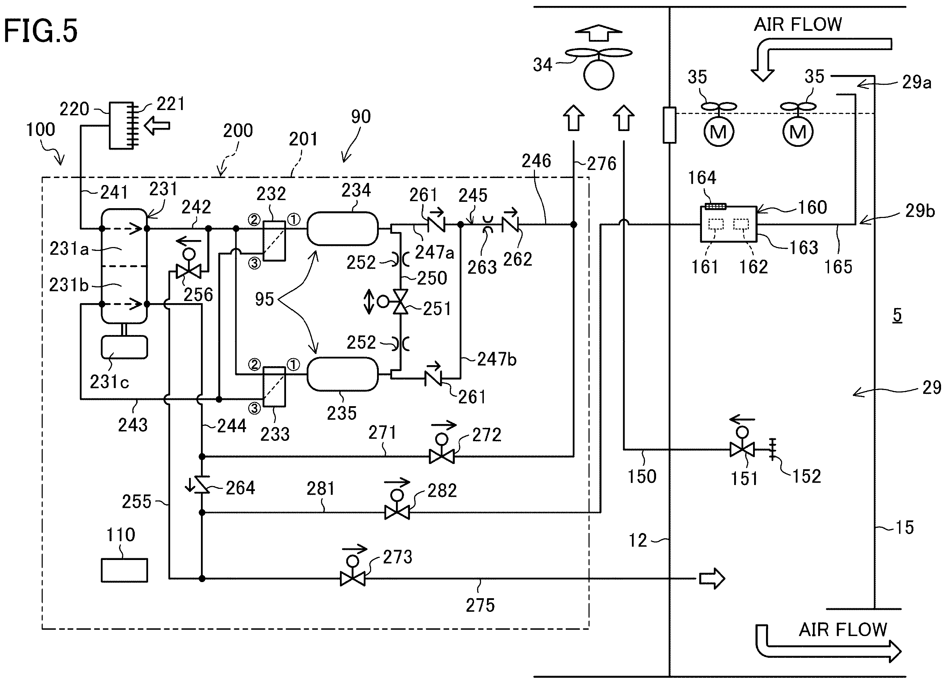

As illustrated in FIG. 5, the inside air control apparatus (100) includes a filter unit (220), a main unit (200), a gas supply pipe (275), a gas discharge pipe (276), a sensor unit (160), and a ventilation exhaust pipe (150). The inside air control apparatus (100) is a gas separation apparatus of a so-called pressure swing adsorption (PSA) type.

The inside air control apparatus (100) generates a treated gas by treating atmospheric air that is outside air. Specifically, the inside air control apparatus (100) separates outside air into nitrogen-enriched gas having a higher nitrogen concentration and a lower oxygen concentration than the outside air and oxygen-enriched gas having a lower nitrogen concentration and a higher oxygen concentration than the outside air. The nitrogen-enriched gas is a first gas and the oxygen-enriched gas is a second gas. The nitrogen-enriched gas is a low oxygen concentration gas having an oxygen concentration lower than that of the outside air. The oxygen concentration of the nitrogen-enriched gas is, for example, about 3%.

### <Filter Unit and Outside Air Pipe>

The filter unit (220) is a member having a box shape. The filter unit (220) is installed in the external equipment room (28) of the transportation refrigeration apparatus (10). The filter unit (220) includes an air filter (221). The air filter (221) is a filter for capturing dust, salt, and the like contained in the outside air. The air filter (221) of the present embodiment is an air-permeable, waterproof membrane filter.

The filter unit (220) is connected to the main unit (200) via an outside air pipe (241). One end of the outside air pipe (241) is connected to the filter unit (220). The other end of the outside air pipe (241) is connected to an air pump (231) to be described later. The outside air pipe (241) guides the outside air (atmospheric air) having passed through the air filter (221) to the air pump (231).

### <Main Unit>

The main unit (200) is installed in the external equipment room (28) of the transportation refrigeration apparatus (10). The main unit (200) includes the air pump (231), a first adsorption vessel (234), a second adsorption vessel (235), a first switching valve (232), a second switching valve (233), and a unit case (201) housing those components. The unit case (201) houses an introduction pipe (242), a suction pipe (243), a first gas pipe (244), and a second gas pipe (245).

### <Air Pump>

The air pump (231) includes a compression-side pump (231a), a decompression-side pump (231b), and a drive motor (231c). Each of the compression-side pump (231a) and the decompression-side pump (231b) sucks and discharges air. The compression-side pump (231a) and the decompression-side pump (231b) are connected to a drive shaft of the single drive motor (231c). In the air pump (231), both the compression-side pump (231a) and the decompression-side pump (231b) are driven by the single drive motor (231c).

The compression-side pump (231a) includes a suction port connected to the other end of the outside air pipe (241). The compression-side pump (231a) includes a discharge port connected to one end of the introduction pipe (242). The compression-side pump (231a) supplies treated gas, which has been sucked from the outside air pipe (241), to the first adsorption vessel (234) and the second adsorption vessel (235) through the introduction pipe

(242).

The decompression-side pump (231b) includes a suction port connected to the suction pipe (243). The decompression-side pump (231b) includes a discharge port connected to the first gas pipe(244). The decompression-side pump (231b) discharges the gas to the first gas pipe (244), where the gas has been sucked from the first adsorption vessel (234) and the second adsorption vessel (235) through the suction pipe (243).

### <Introduction Pipe>

The introduction pipe (242) is a pipe for guiding treated gas, which has been discharged from the compression-side pump (231a), to the first adsorption vessel (234) and the second adsorption vessel (235). One end of the introduction pipe (242) is connected to the discharge port of the compression-side pump (231a). The other end of the introduction pipe (242) branches into two branch pipes, one of which is connected to the first switching valve (232) and the other one of which is connected to the second switching valve (233).

### <Suction Pipe>

The suction pipe (243) is a pipe for guiding gas, which has flown out from the first adsorption vessel (234) and the second adsorption vessel (235), to the decompression-side pump (231b). One end of the suction pipe (243) is connected to the suction port of the decompression-side pump (231b). The other end of the suction pipe (243) branches into two branch pipes, one of which is connected to the first switching valve (232) and the other one of which is connected to the second switching valve (233).

### <First Gas Pipe>

The first gas pipe (244) is a pipe through which nitrogen-enriched gas discharged from the decompression-side pump (231b) flows. The first gas pipe (244) serves as a first gas passage through which nitrogen-enriched gas flows. One end of the first gas pipe (244) is connected to a discharge port of the decompression-side pump (231b). The other end of the first gas pipe (244) is connected to the gas supply pipe (275).

The first gas pipe (244) is provided with a check valve (264). The check valve (264) allows gas to flow only from one end to the other end of the first gas pipe (244) and blocks gas from flowing in the reverse direction.

### <Switching Valve>

The first switching valve (232) and the second switching valve (233) are switching valves each having three ports. The first switching valve (232) and the second switching valve (233) are each configured to switch between a first state (indicated by the solid line in FIG. 3) where a first port communicates with a second port so as to be blocked from a third port, and a second state (indicated by the broken line in FIG. 3) where the first port communicates with the third port so as to be blocked from the second port.

The first switching valve (232) has the first port connected to one end of the first adsorption vessel (234). The first switching valve (232) has the second port connected to one of the branch pipes of the introduction pipe (242), and the third port connected to one of the branch pipes of the suction pipe (243). The first switching valve (232) switches between a state where the first adsorption vessel (234) is connected to the compression-side pump (231a) and a state where the first adsorption vessel (234) is connected to the decompression-side pump (231b).

The second switching valve (233) has the first port connected to one end of the second adsorption vessel (235). The second switching valve (233) has the second port connected to one of the branch pipes of the introduction pipe (242), and the third port connected to one of the branch pipes of the suction pipe (243). The second switching valve (233) switches between a state where the second adsorption vessel (235) is connected to the compression-side pump (231a) and a state where the second adsorption vessel (235) is connected to the decompression-side pump (231b).

### <Adsorption Vessel>

The first adsorption vessel (234) and the second adsorption vessel (235) are members each including a cylindrical container and an adsorbent, where both ends of the cylindrical container are closed and the adsorbent fills the container. The adsorption vessel (234, 235) uses the adsorbent in order to separate air to be treated (outside air in the present embodiment) into an oxygen-enriched gas and a nitrogen-enriched gas.

The adsorbent that fills each adsorption vessel (234, 235) has characteristics of adsorbing nitrogen and water (water vapor) in treated gas in a pressurized state with a pressure higher than the atmospheric pressure, and desorbing nitrogen and water in a depressurized state with a pressure lower than the atmospheric pressure. One example of an adsorbent having such characteristics is porous zeolite with pores having a diameter smaller than the diameter of nitrogen molecules (3.0 angstrom) and larger than the diameter of oxygen molecules (2.8 angstrom).

The first adsorption vessel (234) and the second adsorption vessel (235) constitute an air treatment unit (95) together with the first switching valve (232) and the second switching valve (233).

### <Second Gas Pipe>

The second gas pipe (245) includes a trunk pipe (246), a first branch pipe (247a), and a second branch pipe (247b). The second gas pipe (245) serves as a second gas passage through which oxygen-enriched gas flows.

The first branch pipe (247a) is a pipe for connecting the other end of the first adsorption vessel (234) to one end of the trunk pipe (246). The second branch pipe (247b) is a pipe for connecting the other end of the second adsorption vessel (235) to one end of the trunk pipe (246). The first branch pipe (247a) and the second branch pipe (247b) are each provided with a check valve (261). Each check valve (261) allows air to flow in a direction in which the air flows out from the associated adsorption vessel (234, 235) and blocks air from flowing in the reverse direction.

As described above, one end of the trunk pipe (246) is connected with the first branch pipe (247a) and the second branch pipe (247b). The other end of the trunk pipe (246) is connected to the gas discharge pipe (276) described later. The trunk pipe (246) is provided with an orifice (263) and a check valve (262) in sequence from one end to the other end thereof. The check valve (262) allows air to flow from one end to the other end of the trunk pipe (246) and blocks air from flowing in the reverse direction.

### <Purge Pipe>

The first branch pipe (247a) and the second branch pipe (247b) of the second gas pipe (245) are each connected with a purge pipe (250). The purge pipe (250) has ends, one of which is connected to the first branch pipe (247a) and the other one of which is connected to the second branch pipe (247b). The one end of the purge pipe (250) is connected to the first branch pipe (247a) between the first adsorption vessel (234) and the check valve (261). The other end of the purge pipe (250) is connected to the second branch pipe (247b) between the second adsorption vessel (235) and the check valve (261).

The purge pipe (250) is provided with a purge valve (251). The purge valve (251) is an on-off valve comprised of an electromagnetic valve. The purge valve (251) is opened to equalize the pressures of the first adsorption vessel (234) and the second adsorption vessel (235). An orifice (252) is provided on each side of the purge valve (251) of the purge pipe (250).

### <Exhaust Connection Pipe>

The first gas pipe (244) is connected with an exhaust connection pipe (271). The exhaust connection pipe (271) has ends, one of which is connected to the first gas pipe (244) and the other one of which is connected to the second gas pipe (245). The one end of the exhaust connection pipe (271) is connected to the first gas pipe (244) between the decompression-side pump (231b) and the check valve (264). The other end of the exhaust connection pipe (271) is connected to one end of the gas discharge pipe (276).

The exhaust connection pipe (271) is provided with a gas discharge valve (272). The gas discharge valve (272) is an on-off valve comprised of an electromagnetic valve. When the gas discharge valve (272) is opened, the nitrogen-enriched gas flowing in the first gas pipe (244) is discharged to the outside of the container body (2).

### <Gas Supply Pipe>

As described above, the first gas pipe (244) is connected to one end of the gas supply pipe (275). The gas supply pipe (275) extends to the outside of the unit case (201). The other end of the gas supply pipe (275) opens to a downstream side of the internal fan (35) in the inside air flow path (29) of the transportation refrigeration apparatus (10). The gas supply pipe (275) is a pipe for introducing gas flowing thereinto from one end thereof to the inside of the container body (2).

The gas supply pipe (275) is provided with a gas supply valve (273). The gas supply valve (273) is an on-off valve comprised of an electromagnetic valve.

### <Gas Discharge Pipe>

As described above, one end of the gas discharge pipe (276) is connected with the trunk pipe (246) of the second gas pipe (245) and the exhaust connection pipe (271). The gas discharge pipe (276) extends to the outside of the unit case (201). The other end of the gas discharge pipe (276) opens to the external equipment room (28) of the transportation container (1). The gas discharge pipe (276) is a pipe for discharging gas flowing therein from one end thereof to the outside of the container body (2).

### <Measurement Pipe>

The first gas pipe (244) is connected with a measurement pipe (281). The measurement pipe (281) is a pipe for connecting the first gas pipe (244) to the sensor unit (160). One end of the measurement pipe (281) is connected to the first gas pipe (244) at a downstream side of the check valve (264). The other end of the measurement pipe (281) is connected to the sensor unit (160).

The measurement pipe (281) is provided with a measurement on-off valve (282). The measurement on-off valve (282) is an on-off valve comprised of an electromagnetic valve. The measurement on-off valve (282) is opened when sending air flowing in the first gas pipe (244) to the sensor unit (160).

### <Bypass Pipe>

The introduction pipe (242) is connected with a bypass connection pipe (255). The bypass connection pipe (255) is a pipe for enabling outside air to bypass the first adsorption vessel (234) and the second adsorption vessel (235) and to be supplied to the storage space (5) of the transportation container (1). One end of the bypass connection pipe (255) is connected between the branch point of the introduction pipe (242) and the compression-side pump (231a). The other end of the bypass connection pipe (255) is connected to one end of the gas supply pipe (275).

The bypass connection pipe (255) is provided with a bypass valve (256). The bypass valve (256) is an on-off valve comprised of an electromagnetic valve. The bypass valve (256) is opened when the outside air discharged by the compression-side pump (231a) is supplied to the storage space (5) without changing the composition of the outside air.

### <Sensor Unit>

The sensor unit (160) includes an oxygen sensor (161), a carbon dioxide sensor (162), and a sensor case (163). The sensor unit (160) is a detector that detects a concentration of a component of the inside air. The sensor unit (160) is provided in the secondary flow path (29b) of the inside air flow path (29).

The oxygen sensor (161) is, e.g., a sensor of a zirconia current type that measures an oxygen concentration of mixed gas such as air. The carbon dioxide sensor (162) is, e.g., a non-dispersive infrared (NDIR) sensor that measures a carbon dioxide concentration of mixed gas such as air. The oxygen sensor (161) and the carbon dioxide sensor (162) are housed in the sensor case (163).

The sensor case (163) is a box-shaped member. The sensor case (163) includes an air filter (164). The air filter (164) is a membrane filter for capturing dust and the like contained in the inside air. The air filter (164) filters the inside air flowing into the sensor case (163).

The sensor case (163) is connected with the measurement pipe (281). The sensor case (163) is connected with an outlet pipe (165). The outlet pipe (165) has an inlet end connected to the sensor case (163), and an outlet end opening to an upstream of the internal fan (35) in the inside air flow path (29). That is, the outlet end of the outlet pipe (165) opens to the primary flow path (29a) of the inside air flow path (29).

When the measurement on-off valve (282) is closed, the inside air flows inside the sensor case (163). Specifically, the inside air flowing through the secondary flow path (29b) of the inside air flow path (29) flows into the sensor case (163) through the air filter (164). After having passed through the sensor case (163), the inside air flows through the outlet pipe (165), and then flows into the primary flow path (29a) of the inside air flow path (29). Thus, when the measurement on-off valve (282) is closed, the oxygen sensor (161) measures an oxygen concentration of the inside air, and the carbon dioxide sensor (162) measures a carbon dioxide concentration of the inside air.

On the other hand, when the measurement on-off valve (282) is opened, the gas flowing in the measurement pipe (281) flows inside the sensor case (163). Specifically, the gas flowing in the first gas pipe (244) or the bypass connection pipe (255) flows into the sensor case (163) through the measurement pipe (281). After having passed through the sensor case (163), the gas flows through the outlet pipe (165), and then flows into the primary flow path (29a) of the inside air flow path (29). Thus, when the measurement on-off valve (282) is opened, the oxygen sensor (161) measures an oxygen concentration of the gas flowing from the measurement pipe (281) into the sensor case (163), and the carbon dioxide sensor (162) measures a carbon dioxide concentration of the gas flowing from the measurement pipe (281) into the sensor case (163).

### <Ventilation Exhaust Pipe>

The ventilation exhaust pipe (150) is a pipe for discharging inside air in the transportation container (1) to the external space. The ventilation exhaust pipe (150) penetrates the external wall (21) and the internal wall (22) of the transportation refrigeration apparatus (10). The ventilation exhaust pipe (150) is provided with a ventilation exhaust valve (151). The ventilation exhaust valve (151) is an on-off valve comprised of an electromagnetic valve.

### -Gas Supply Operation of Inside Air Control Apparatus-

The inside air control apparatus (100) performs a gas supply operation. The gas supply operation is an operation of generating the first gas by treating the outside air and supplying the first gas to the storage space (5) of the storage (2). In the gas supply operation, the ventilation exhaust valve (151) is opened.

In the gas supply operation, the inside air control apparatus (100) alternately repeats the first operation and the second operation. The inside air control apparatus (100) repeats the first operation and the second operation alternately each for predetermined switching period (e.g., 14 seconds). As a result, the outside air is separated into the nitrogen-enriched gas (first gas) and the oxygen-enriched gas (second gas) in the air treatment unit (95) of the inside air control apparatus (100).

### <First Operation>

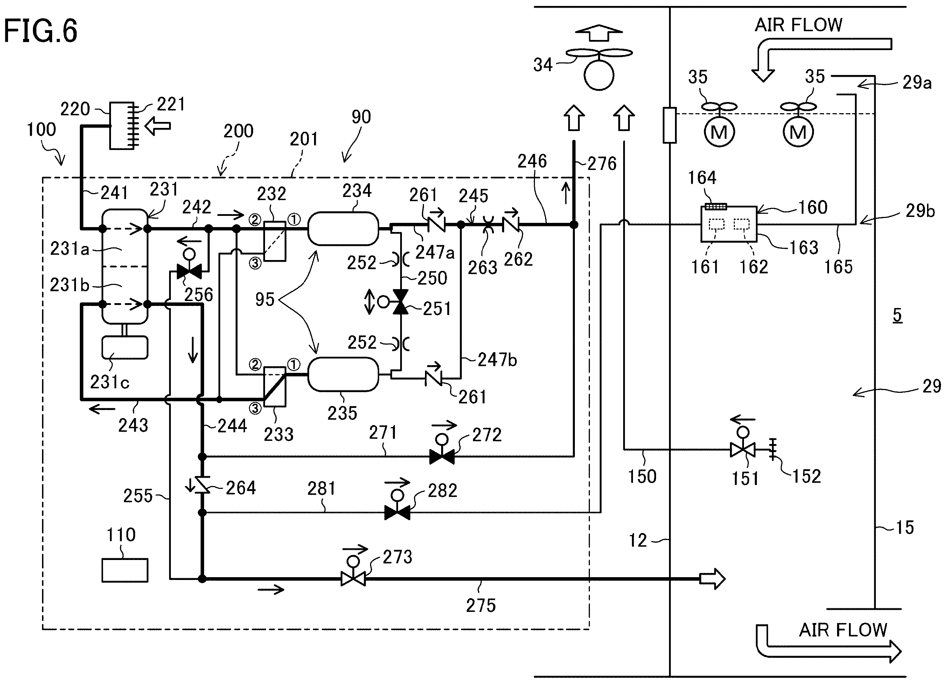

As illustrated in FIG. 6, in the first operation, the first switching valve (232) is set to the first state, and the second switching valve (233) is set to the second state. In the first operation, the purge valve (251), the bypass valve (256), and the measurement on-off valve (282) are held closed. In the first operation, the air pump (231) operates to perform an adsorption operation for the first adsorption vessel (234) and a desorption operation for the second adsorption vessel (235).

The compression-side pump (231a) sucks and compresses the outside air (atmospheric air) from the outside air pipe (241), and supplies the compressed outside air to the first adsorption vessel (234). In the first adsorption vessel (234), nitrogen and water (water vapor) in the supplied outside air are adsorbed by the adsorbent. As a result, in the first adsorption vessel (234), oxygen-enriched gas having a lower nitrogen concentration and a higher oxygen concentration than the outside air is produced. The oxygen-enriched gas flows out from the first adsorption vessel (234) to the first branch pipe (247a) of the second gas pipe (245), and then is discharged to the external space (6) through the gas discharge pipe (276).

Meanwhile, the decompression-side pump (231b) sucks gas from the second adsorption vessel (235). In the second adsorption vessel (235), the pressure therein decreases, and nitrogen and water are desorbed from the adsorbent. As a result, in the second adsorption vessel (235), nitrogen-enriched gas having a higher nitrogen concentration and a lower oxygen concentration than the outside air is produced. The nitrogen-enriched gas flows from the second adsorption vessel (235) into the suction pipe (243), and is sucked into the decompression-side pump (231b). The decompression-side pump (231b) compresses and discharges the sucked nitrogen-enriched gas to the first gas pipe (244). The nitrogen-enriched gas flowing through the first gas pipe (244) is supplied to the storage space (5) of the storage (2) through the gas supply pipe (275).

### <Second Operation>

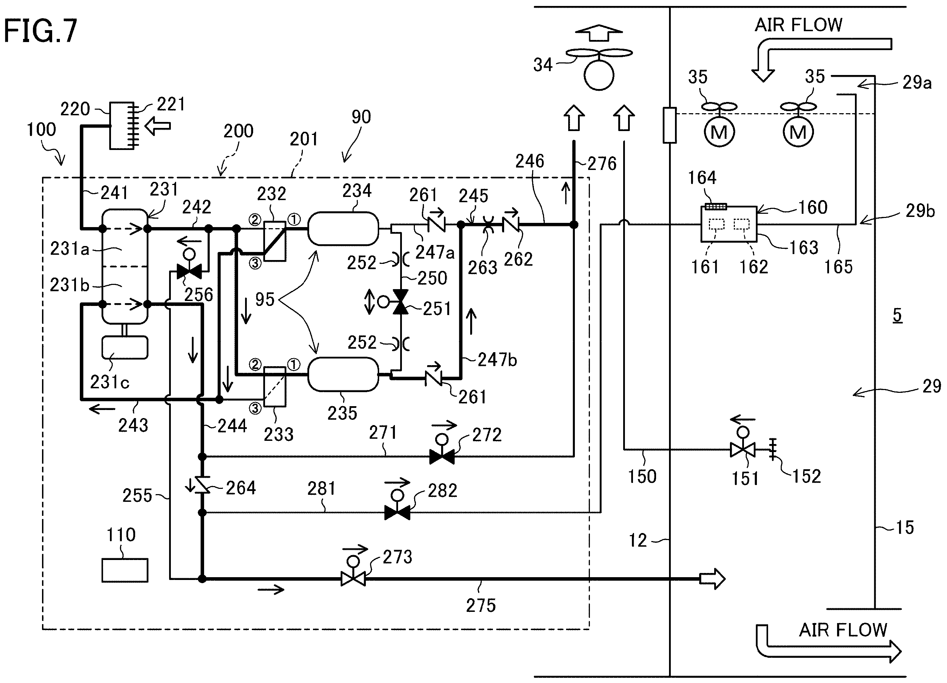

As illustrated in FIG. 7, in the second operation, the first switching valve (232) is set to the second state, and the second switching valve (233) is set to the first state. In the second operation, the purge valve (251), the bypass valve (256), and the measurement on-off valve (282) are held closed. In the second operation, the air pump (231) operates to perform a desorption operation for the first adsorption vessel (234) and an adsorption operation for the second adsorption vessel (235).

The compression-side pump (231a) sucks and compresses the outside air (atmospheric air) from the outside air pipe (241), and supplies the compressed outside air to the second adsorption vessel (235). In the second adsorption vessel (235), nitrogen and water (water vapor) in the supplied outside air are adsorbed the adsorbent. As a result, in the second adsorption vessel (235), oxygen-enriched gas having a lower nitrogen concentration and a higher oxygen concentration than the outside air is produced. The oxygen-enriched gas flows out from the second adsorption vessel (235) to the second branch pipe (247b) of the second gas pipe (245), and then is discharged to the external space (6) through the gas discharge pipe (276).

Meanwhile, the decompression-side pump (231b) sucks gas from the first adsorption vessel (234). In the first adsorption vessel (234), the pressure therein decreases, and nitrogen and water are desorbed from the adsorbent. As a result, in the first adsorption vessel (234), nitrogen-enriched gas having a higher nitrogen concentration and a lower oxygen concentration than the outside air is produced. The nitrogen-enriched gas flows from the first adsorption vessel (234) into the suction pipe (243), and is sucked into the decompression-side pump (231b). The decompression-side pump (231b) compresses and discharges the sucked nitrogen-enriched gas to the first gas pipe (244). The nitrogen-enriched gas flowing through the first gas pipe (244) is supplied to the storage space (5) of the storage (2) through the gas supply pipe (275).

### -Air Introduction Operation of Inside Air Control Apparatus-

The inside air control apparatus (100) performs an air introduction operation. The air introduction operation is an operation of supplying the outside air, which is the atmosphere, to the storage space (5) of the storage (2) as it is without changing the composition of the outside air.

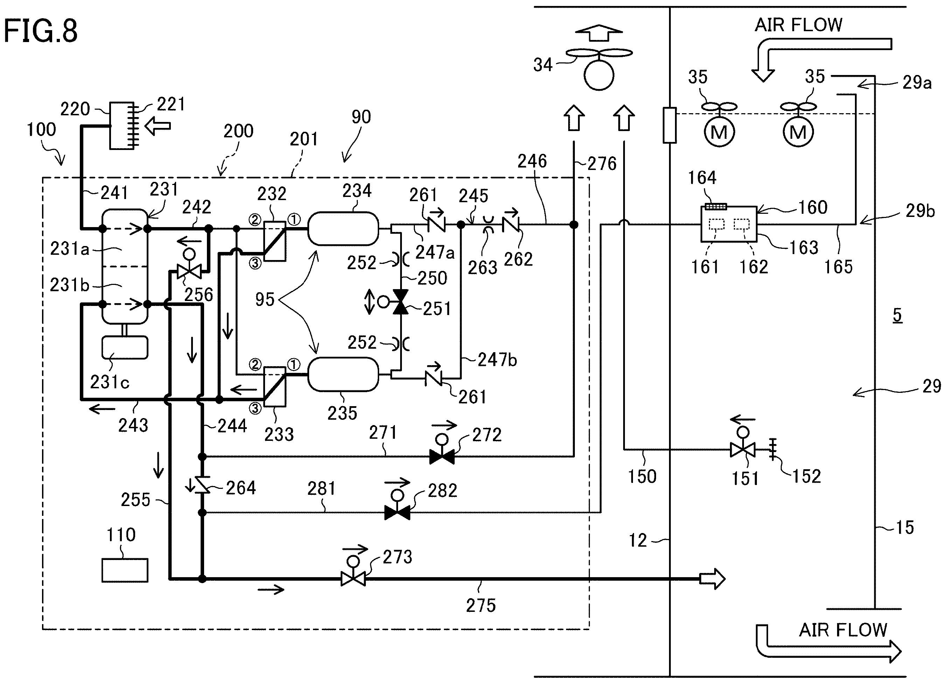

As illustrated in FIG. 8, in the air introduction operation, both the first switching valve (232) and the second switching valve (233) are set to the second state. In the air introduction operation, the gas supply valve (273) and the bypass valve (256) are held opened, and the other on-off valves (251, 272, 282) are held closed. In the air introduction operation, the air pump (231) is operated, and the ventilation exhaust valve (151) is opened.

The compression-side pump (231a) sucks and compresses the outside air (atmospheric air) from the outside air pipe (241), and discharges the compressed outside air to the introduction pipe (242). The outside air discharged from the compression-side pump (231a) flows through the introduction pipe (242), the bypass connection pipe (255), and the gas supply pipe (275) in sequence, and is supplied to the inside air flow path (29). In this manner, in the air introduction operation, the air having the same composition as that of the atmospheric air is supplied to the storage space (5) of the transportation container (1).

The decompression-side pump (231b) sucks gas from both the first adsorption vessel (234) and the second adsorption vessel (235) and discharges the sucked gas to the first gas pipe (244). The gas discharged from the decompression-side pump (231b) to the first gas pipe (244) flows into the gas supply pipe (275), and is supplied to the inside air flow path (29) together with the outside air having flowed from the bypass connection pipe (255) into the gas supply pipe (275).

When the decompression-side pump (231b) sucks gas from the first adsorption vessel (234) and the second adsorption vessel (235), the pressures of the first adsorption vessel (234) and the second adsorption vessel (235) gradually decrease. Then, when the duration of the air introduction operation exceeds a certain time (for example, 45 seconds), the flow rate of gas sucked by the decompression-side pump (231b) reaches substantially zero.

### -Controller-

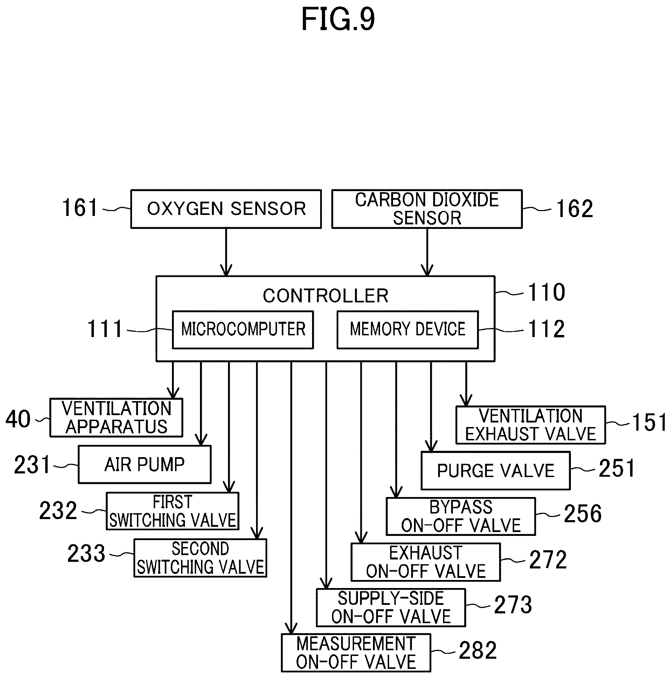

As illustrated in FIG. 9, the controller (110) includes a microcomputer (111) mounted on a control board, and a memory device (112) storing software for operating the microcomputer (111). The memory device (112) is a semiconductor memory.

The controller (110) controls the components of the inside air control apparatus (100). The controller (110) receives values measured by the oxygen sensor (161) and the carbon dioxide sensor (162). The controller (110) controls the air pump (231), a first switching valve (136), and a second switching valve (137). The controller (110) controls the ventilation exhaust valve (151), the purge valve (251), the bypass valve (256), the gas discharge valve (272), the gas supply valve (273), and the measurement on-off valve (282).

The controller (110) controls the ventilation apparatus (40). Specifically, the controller (110) rotates the opening and closing lid (45) of the ventilation apparatus (40) to adjust opening degrees of the air supply communication port (41a) and the air discharge communication port (42a). When the opening degree of the air supply communication port (41a) is changed, the flow rate of the outside air supplied to the storage space (5) through the air supply passage (41) changes. When the opening degree of the air discharge communication port (42a) is changed, the flow rate of the inside air discharged to the external space (6) through the air discharge passage (42) changes.

### -Control Operation of Controller (Overview)-

The outline of the control operation performed by the controller (110) will be described.

### <Oxygen Concentration Reduction Mode>

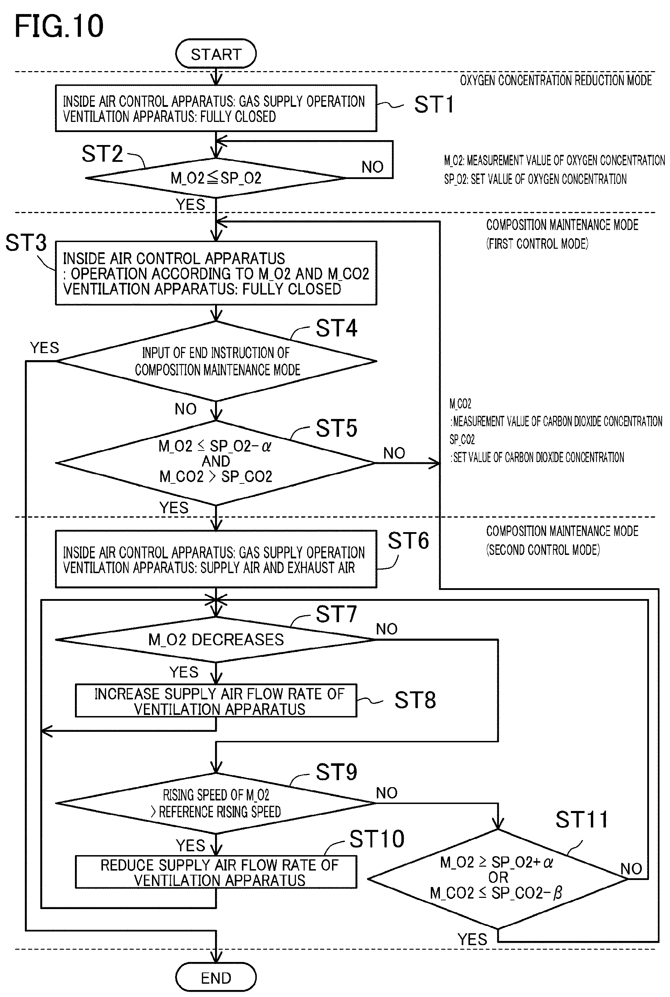

The controller (110) executes an oxygen concentration reduction mode when the air composition adjustment apparatus (90) starts operating. The oxygen concentration reduction mode is a control mode in which the air composition adjustment apparatus (90) is controlled so that the oxygen concentration of the inside air decreases from the oxygen concentration (21%) of the atmosphere to the set value SP_O2 of the oxygen concentration. The set value SP_O2 of the oxygen concentration is a sixth predetermined value. The oxygen concentration reduction mode is processing from step ST1 to step ST2 in the flowchart of FIG. 10.

### <Composition Maintenance Mode>

When the oxygen concentration reduction mode ends, the controller (110) then executes a composition maintenance mode. The composition maintenance mode is a control mode in which the air composition adjustment apparatus (90) is controlled so that the oxygen concentration and the carbon dioxide concentration of the inside air are maintained within respective allowable ranges. The composition maintenance mode is processing from step ST3 to step ST11 in the flowchart of FIG. 10.

In the present embodiment, the allowable range of the oxygen concentration is a range of SP_O2-α or more and SP_O2+α or less (SP_O2-α ≤ M_O2 ≤ SP_O2+α). The constant α is, for example, 1%. The measurement value M_O2 of the oxygen concentration is a detection value of the oxygen sensor (161). The set value SP_O2 of the oxygen concentration is input to the controller (110) by an administrator or the like of the transportation refrigeration apparatus (10). The set value SP_O2 of the oxygen concentration is, for example, 3%. The set value SP_O2 of the oxygen concentration is set to a value corresponding to the kinds of fruits and vegetables stored in the storage space (5).

The allowable range of the carbon dioxide concentration is a range of SP_CO2-β or more and SP_CO2+β or less (SP_CO2-β ≤ M_CO2 ≤ SP_CO2+β). The constant β is, for example, 1%. The measurement value M_CO2 of the carbon dioxide concentration is a detection value of the carbon dioxide sensor (162). The set value SP_CO2 of the carbon dioxide concentration is input to the controller (110) by an administrator or the like of the transportation refrigeration apparatus (10). The set value SP_CO2 of the carbon dioxide concentration is, for example, 5%. The set value SP_CO2 of the carbon dioxide concentration is set to a value corresponding to the kinds of fruits and vegetables stored in the storage space (5).

The controller (110) selectively performs the first control mode and the second control mode in the composition maintenance mode.

### <First Control Mode>

The first control mode is a control mode in which the inside air control apparatus (100) is operated in a state where supply of air and discharge of air by the ventilation apparatus (40) are stopped. The first control mode is a single-operation mode. The first control mode is processing from step ST3 to step ST5 in the flowchart of FIG. 10. In the first control mode, the controller (110) controls operation of the inside air control apparatus (100) so that the oxygen concentration and the carbon dioxide concentration of the inside air are maintained in respective allowable ranges.

### <Second Control Mode>

The second control mode is a control mode in which the inside air control apparatus (100) is caused to perform a gas supply operation and the ventilation apparatus (40) is caused to perform supply of air and discharge of air. The second control mode is a dual-operation mode. The second control mode is processing from step ST6 to step ST11 in the flowchart of FIG. 10. The second control mode is executed when it is necessary to suppress an excessive increase in the oxygen concentration of the inside air while reducing the carbon dioxide concentration of the inside air during execution of the composition maintenance mode.

In the second control mode, the controller (110) operates both the inside air control apparatus (100) and the ventilation apparatus (40) to secure the amount of carbon dioxide discharged from the storage space (5), and causes the inside air control apparatus (100) to perform the gas supply operation to keep the increase amount of the oxygen concentration of the inside air low.

### -Control Operation of Controller (Details)-

The control operation performed by the controller (110) will be described in detail with reference to the flowchart of FIG. 10.

### <Step ST1>

As described above, the controller (110) executes the oxygen concentration reduction mode when the air composition adjustment apparatus (90) starts operating.

In the processing of step ST1, the controller (110) sets the opening and closing lid (45) of the ventilation apparatus (40) to a position covering the entire air supply communication port (41a) and the entire air discharge communication port (42a). In this state, both the air supply communication port (41a) and the air discharge communication port (42a) are fully closed, and the ventilation apparatus (40) performs neither air supply nor air exhaust.

In the processing of step ST1, the controller (110) causes the inside air control apparatus (100) to perform a gas supply operation. In the gas supply operation, the inside air control apparatus (100) alternately repeats the first operation and the second operation to supply the nitrogen-enriched gas (first gas) to the storage space (5) of the container body (2). In the gas supply operation, the ventilation exhaust valve (151) is in the open state, and the air in the storage space (5) is discharged to the external space (6) through the ventilation exhaust pipe (150). Therefore, the air in the storage space (5) is gradually replaced by the nitrogen-enriched gas, and the oxygen concentration of the inside air of the storage space (5) gradually decreases.

### <Step ST2>

While the inside air control apparatus (100) is performing the gas supply operation, the controller (110) performs the processing of step ST2.

In the processing of step ST2, the controller (110) obtains the detection value measured by the oxygen sensor (161). The detection value of the oxygen sensor (161) is a measurement value M_O2 of the oxygen concentration of the inside air. The controller (110) compares the measurement value M_O2 of the oxygen concentration with the set value SP_O2 of the oxygen concentration.

When the measurement value M_O2 of the oxygen concentration is higher than the set value SP_O2 of the oxygen concentration (M_O2 > SP_O2), the controller (110) causes the inside air control apparatus (100) to continue the gas supply operation and performs the processing of step ST2 again. On the other hand, when the measurement value M_O2 of the oxygen concentration is equal to or less than the set value SP_O2 of the oxygen concentration (M_O2 ≤ SP_O2), the controller (110) ends the oxygen concentration reduction mode and starts the first control mode of the composition maintenance mode.

### <Step ST3>

The controller (110) that has started the first control mode of the composition maintenance mode performs the processing of step ST3.

In the processing of step ST3, the controller (110) sets the opening and closing lid (45) of the ventilation apparatus (40) to a position covering the entire air supply communication port (41a) and the entire air discharge communication port (42a). In this state, both the air supply communication port (41a) and the air discharge communication port (42a) are fully closed, and the ventilation apparatus (40) performs neither air supply nor air exhaust. When the air supply communication port (41a) and the air discharge communication port (42a) are already in the fully closed state at the start of the processing of step ST3, the controller (110) keeps the position of the opening and closing lid (45) of the ventilation apparatus (40) unchanged.

In the processing of step ST3, the controller (110) controls the operation of the inside air control apparatus (100) so that the oxygen concentration and the carbon dioxide concentration of the inside air are maintained in the respective allowable ranges.

In the processing of step ST3, the controller (110) acquires the detection value of the oxygen sensor (161) and the detection value of the carbon dioxide sensor. The detection value of the oxygen sensor (161) is a measurement value M_O2 of the oxygen concentration of the inside air. The detection value of the carbon dioxide sensor (162) is a measurement value M_CO2 of the carbon dioxide concentration of the inside air.

In the processing of step ST3, the controller (110) switches the inside air control apparatus (100) to a state in which the gas supply operation is performed, a state in which the air introduction operation is performed, and a pause state in which the gas supply operation and the air introduction operation are not performed based on the measurement value M_O2 of the oxygen concentration and the measurement value M_CO2 of the carbon dioxide concentration.

The controller (110) causes the inside air control apparatus (100) to perform the gas supply operation when the oxygen concentration of the inside air needs to be lowered. When the inside air control apparatus (100) performs the gas supply operation, the nitrogen-enriched gas is supplied to the storage space (5), and the oxygen concentration of the inside air decreases.

The controller (110) causes the inside air control apparatus (100) to perform the air introduction operation when the oxygen concentration of the inside air needs to be increased and when the carbon dioxide concentration of the inside air needs to be decreased. When the inside air control apparatus (100) performs the air introduction operation, the outside air (atmosphere) is supplied to the storage space (5) as it is. The outside air, which is the atmosphere, has an oxygen concentration of 21% and a carbon dioxide concentration of 0.03%. Therefore, when the outside air is supplied to the storage space (5), the oxygen concentration of the inside air increases, and the carbon dioxide concentration of the inside air decreases.

The controller (110) brings the inside air control apparatus (100) into a pause state when it is not necessary to adjust both the oxygen concentration and the carbon dioxide concentration of the inside air. The inside air control apparatus (100) in the pause state performs neither the gas supply operation nor the air introduction operation. On the other hand, in the storage space (5), the stored fruits and vegetables breathe. Therefore, while the inside air control apparatus (100) is in the pause state, the oxygen concentration of the inside air gradually decreases, and the carbon dioxide concentration of the inside air gradually increases.

### <Step ST4>

The controller (110) performs the processing of step ST4 while controlling the inside air control apparatus (100). In the processing of step ST4, the controller (110) determines whether or not an end instruction of the composition maintenance mode has been input. The end instruction of the composition maintenance mode is input, for example, when the transportation of fruits and vegetables is ended.

When an end instruction of the composition maintenance mode is input, the controller (110) ends the composition maintenance mode. On the other hand, when the end instruction of the composition maintenance mode is not input, the controller (110) continues the composition maintenance mode and performs the processing of step ST5.

### <Step ST5>

In the processing of step ST5, the controller (110) acquires the measurement value M_O2 of the oxygen concentration of the inside air and the measurement value M_CO2 of the carbon dioxide concentration of the inside air. The controller (110) then determines whether or not the first condition and the second condition are satisfied.

The first condition is that "the measurement value M_O2 of oxygen concentration is equal to or less than the lower limit value SP_O2-α of the allowable range of oxygen concentration (M_O2 ≤ SP_O2-α)". The lower limit value SP_O2-α of the allowable range of oxygen concentration is a first predetermined value. The first condition may be a condition that "the measurement value M_O2 of oxygen concentration is lower than the first predetermined value (M_O2<SP_O2-α)".

The second condition is that "the measurement value M_CO2 of the carbon dioxide concentration is higher than the set value SP_CO2 of the carbon dioxide concentration (M_CO2 > SP_CO2)". The set value SP_CO2 of the carbon dioxide concentration is a second predetermined value.

When both the first condition and the second condition are not satisfied and when only one of the first condition and the second condition is satisfied, the controller (110) continues the first control mode. Specifically, the controller (110) performs the processing of step ST3 again.

On the other hand, when both the first condition and the second condition are satisfied, it is necessary to suppress an excessive increase in the oxygen concentration of the inside air while reducing the carbon dioxide concentration of the inside air. Therefore, the controller (110) ends the first control mode and starts the second control mode.

### <Step ST6>

The controller (110) that has started the second control mode performs the processing of step ST6.

In the processing of step ST6, the controller (110) causes the inside air control apparatus (100) to perform a gas supply operation. An inside air control apparatus (100) that performs a gas supply operation supplies the nitrogen-enriched gas generated in the air treatment unit (95) to the storage space (5). The nitrogen-enriched gas is a gas separated from the outside air (atmosphere). Thus, the carbon dioxide concentration of the nitrogen-enriched gas is equal to or less than the carbon dioxide concentration (0.03%) of the atmosphere. Therefore, the inside air control apparatus (100) that performs a gas supply operation supplies the nitrogen-enriched gas having a very low carbon dioxide concentration to the storage space (5).

In the processing of step ST6, the controller (110) causes the ventilation apparatus (40) to supply air and exhaust air. Specifically, the controller (110) rotates the opening and closing lid (45) of the ventilation apparatus (40) to open a part of each of the air supply communication port (41a) and the air discharge communication port (42a). At that time, the controller (110) moves the opening and closing lid (45) to a position where the areas of the opening portions of the air supply communication port (41a) and the air discharge communication port (42a) become predetermined initial values.

When a part of the air supply communication port (41a) is opened, the outside air is supplied to the storage space (5) through the air supply passage (41). When a part of the air discharge communication port (42a) is opened, the inside air having passed through the air discharge passage (42) is discharged to the external space (6).

An opening portion of the air supply communication port (41a) is a portion of the air supply communication port (41a) overlapping the air supply opening (46) of the opening and closing lid (45) (a portion denoted by a dot in FIG. 4). The initial value of the opening portion of the air supply communication port (41a) is, for example, about 1/3 of the entire area of the air supply communication port (41a). An opening portion of the air discharge communication port (42a) is a portion (a portion denoted by a dot in FIG. 4) overlapping with the air discharge opening (47) of the opening and closing lid (45) in the air discharge communication port (42a). The initial value of the opening portion of the air discharge communication port (42a) is, for example, about 1/3 of the entire area of the air discharge communication port (42a).

### <Step ST7>

The controller (110) performs the processing of step ST7 next to the processing of step ST6.

In the processing of step ST7, the controller (110) determines whether or not the measurement value M_O2 of the oxygen concentration has decreased. Specifically, the controller (110) stores, as the reference oxygen concentration, the measurement value of the oxygen concentration at the time when the processing of step ST6 is completed. Then, in the processing of step ST7, the controller (110) acquires the measurement value M_O2 of the oxygen concentration at the time when a predetermined time (for example, 60 minutes) has elapsed from the start of the processing of step ST7, and compares the acquired measurement value M_O2 of the oxygen concentration with the reference oxygen concentration.

In a case where the acquired measurement value M_O2 of the oxygen concentration is lower than the reference oxygen concentration, the measurement value M_O2 of the oxygen concentration is decreased, and thus the controller (110) performs the processing of step ST8. On the other hand, when the acquired measurement value M_O2 of the oxygen concentration is equal to or more than the reference oxygen concentration, the measurement value M_O2 of the oxygen concentration is not decreased, and thus the controller (110) performs the processing of step ST9.

### <Step ST8>

When the measurement value M_O2 of the oxygen concentration is decreased, it is necessary to increase the oxygen concentration of the inside air. Therefore, the controller (110) increases the supply air flow rate of the ventilation apparatus (40) in the processing of step ST8.

In the processing of step ST8, the controller (110) rotates the opening and closing lid (45) of the ventilation apparatus (40) to increase the area of the opening portion of the air supply communication port (41a) and the area of the opening portion of the air discharge communication port (42a). When the area of the opening portion of the air supply communication port (41a) increases, the flow rate of the outside air supplied to the storage space (5) through the air supply passage (41) increases. As a result, the amount of oxygen supplied to the storage space (5) increases. When the area of the opening portion of the air discharge communication port (42a) increases, the flow rate of the inside air that passes through the air discharge passage (42) and is discharged to an external space (6) increases.

When the processing of step ST8 ends, the controller (110) performs the processing of step ST7 again.

### <Step ST9>

When the measurement value M_O2 of the oxygen concentration is not decreased, it is not necessary to increase the oxygen concentration of the inside air. Therefore, in this case, the controller (110) performs the processing of step ST9.

In the processing of step ST9, the controller (110) calculates the rising speed of the measurement value M_O2 of the oxygen concentration. Specifically, the controller (110) acquires the measurement value M_O2 of the oxygen concentration at the time when the processing of step ST9 is started and the measurement value M_O2 of the oxygen concentration at the time when a predetermined time (for example, 60 minutes) has elapsed from the start of the processing of step ST9, and calculates the amount of change (that is, the rising speed of the measurement value M_O2 of the oxygen concentration) in the measurement value M_O2 of the oxygen concentration per unit time using these values.

In the processing of step ST9, the controller (110) determines whether or not the third condition is satisfied. The third condition is that "the rising speed of the measurement value M_O2 of the oxygen concentration is higher than a reference rising speed". The reference rising speed is a third predetermined value. The reference rising speed is recorded in advance in the controller (110). The controller (110) may be configured to change the reference rising speed in accordance with an operation state of the air composition adjustment apparatus or a state of inside air.

When the third condition is satisfied, the controller (110) performs the processing of step ST10. On the other hand, when the third condition is not satisfied, the controller (110) performs the processing of step ST11.

### <Step ST10>

When the rising speed of the measurement value M_O2 of the oxygen concentration is higher than the reference rising speed, the flow rate of the outside air supplied to the storage space (5) by the ventilation apparatus (40) is too large. When the flow rate of the outside air supplied to the storage space (5) by the ventilation apparatus (40) is too high, the oxygen concentration of the inside air excessively increases. Therefore, in this case, the controller (110) performs the processing of step ST10.

In the processing of step ST10, the controller (110) rotationally moves the opening and closing lid (45) of the ventilation apparatus (40) to reduce the area of the opening portion of the air supply communication port (41a) and the area of the opening portion of the air discharge communication port (42a). When the area of the opening portion of the air supply communication port (41a) decreases, the flow rate of the outside air supplied to the storage space (5) through the air supply passage (41) decreases. As a result, the amount of oxygen supplied to the storage space (5) decreases. When the area of the opening portion of the air discharge communication port (42a) decreases, the flow rate of the inside air that passes through the air discharge passage (42) and is discharged to the external space (6) decreases.

When the processing of step ST10 ends, the controller (110) performs the processing of step ST7 again.

### <Step ST11>

When the rising speed of the measurement value M_O2 of the oxygen concentration is equal to or lower than the reference rising speed, the flow rate of the outside air supplied to the storage space (5) by the ventilation apparatus (40) and the flow rate of the inside air discharged from the storage space (5) by the ventilation apparatus (40) are appropriate. Therefore, in this case, the controller (110) performs the processing of step ST11.

In the processing of step ST11, the controller (110) determines whether or not the fourth condition is satisfied and whether or not the fifth condition is satisfied.

The fourth condition is that "the measurement value M_O2 of the oxygen concentration is equal to or more than the upper limit value SP_O2+α of the allowable range of the oxygen concentration". The upper limit value SP_O2+α of the allowable range of the oxygen concentration is a fourth predetermined value. The fourth predetermined value, "the upper limit value SP_O2+α of the allowable range of the oxygen concentration" is higher than the first predetermined value, "the lower limit value SP_O2-α of the allowable range of the oxygen concentration". The fourth condition may be a condition that "the measurement value M_O2 of the oxygen concentration is higher than the fourth predetermined value".

The fifth condition is that "the measurement value M_CO2 of the carbon dioxide concentration is equal to or less than the lower limit value SP_CO2-β of the allowable range of the carbon dioxide concentration". The lower limit value SP_CO2-β of the allowable range of the carbon dioxide concentration is a fifth predetermined value. The fifth predetermined value "the lower limit value of the allowable range of the carbon dioxide concentration SP_CO2-β" is lower than the second predetermined value, "the carbon dioxide concentration setting value SP_CO2". The fifth condition may be a condition that "the measurement value M_CO2 of the carbon dioxide concentration is lower than the fifth predetermined value".

When the fourth condition is not satisfied, it is necessary to increase the oxygen concentration of the inside air. When the fifth condition is not satisfied, the carbon dioxide concentration of the inside air needs to be decreased. Therefore, when both the fourth condition and the fifth condition are not satisfied, the controller (110) continues the second control mode. Specifically, the controller (110) performs the processing of step ST7 again.

When the fourth condition is established, it is not necessary to increase the oxygen concentration of the inside air. When the fifth condition is satisfied, there is no need to decrease the carbon dioxide concentration of the inside air. Therefore, when one or both of the fourth condition and the fifth condition are satisfied, the controller (110) ends the second control mode and starts the first control mode. Specifically, the controller (110) performs the processing of step ST3 again.

### -Feature of Embodiment-

The controller (110) of the air composition adjustment apparatus (90) of the present embodiment performs the first control mode and the second control mode in the composition maintenance mode. Therefore, even when fruits and vegetables with a relatively large respiration amount are stored in the storage space (5), the oxygen concentration and the carbon dioxide concentration of the inside air can be kept within the respective allowable ranges (the range of SP_O2 ± α and the range of SP_CO2 ± β) as long as possible.

Examples of fruits and vegetables having a relatively large respiration amount include climacteric type fruits. The climacteric type fruit has a property that the respiration amount rapidly increases in the process of ripening. The climacteric type fruit includes banana, avocado, apple, peach, and the like. The transportation container (1) including the air composition adjustment apparatus (90) of the present embodiment is suitable for storage and transportation of fruits and vegetables (for example, climacteric fruit) having a relatively large respiration amount.

Hereinafter, the reason why the air composition adjustment apparatus (90) of the present embodiment exhibits the above-described effects will be described.

When fruits and vegetables stored in the storage space (5) breathe, the amount of carbon dioxide contained in the inside air in the storage space (5) increases, and as a result, the carbon dioxide concentration of the inside air increases. In order to suppress the increase in the carbon dioxide concentration of the inside air, it is necessary to supply a gas having a low carbon dioxide concentration to the storage space (5) and discharge the inside air having a high carbon dioxide concentration to the outside of the storage space (5).

The outside air which is the atmosphere has a carbon dioxide concentration of 0.03%. Therefore, if the ventilation apparatus (40) is caused to supply air and discharge air, the outside air having a very low carbon dioxide concentration is supplied to the storage space (5), and the inside air having a high carbon dioxide concentration is discharged from the storage space (5), so that an increase in the carbon dioxide concentration of the inside air can be suppressed.

On the other hand, the outside air which is the atmosphere has an oxygen concentration of 21%. Therefore, when the ventilation apparatus (40) is caused to supply air in order to suppress an increase in the carbon dioxide concentration of the inside air, the outside air having a relatively high oxygen concentration is supplied to the storage space (5).

When fruits and vegetables breathe, oxygen in the inside air is consumed. Therefore, it is necessary to supply a certain amount of oxygen to the storage space (5). However, when the respiration amounts of fruits and vegetables are very large, it is necessary to increase the flow rate of the outside air supplied to the storage space (5) to suppress an increase in the carbon dioxide concentration of the inside air. When the flow rate of the outside air supplied to the storage space (5) is increased, the amount of oxygen supplied to the storage space (5) exceeds the amount of oxygen consumed by breathing of fruits and vegetables, and the oxygen concentration of the inside air may increase.

Therefore, when the first condition and the second condition illustrated in step ST5 of FIG. 10 are satisfied during execution of the first control mode, the controller (110) of the present embodiment ends the first control mode and starts the second control mode. In the second control mode, the controller (110) causes the inside air control apparatus (100) to perform the gas supply operation, and causes the ventilation apparatus (40) to perform supply air and discharge air.

During execution of the second control mode, the ventilation apparatus (40) supplies the outside air to the storage space (5), and the inside air control apparatus (100) supplies the nitrogen-enriched gas to the storage space (5). The oxygen concentration of the nitrogen-enriched gas is significantly lower than the oxygen concentration of the atmosphere. Therefore, by supplying both the outside air and the nitrogen-enriched gas to the storage space (5), the amount of oxygen supplied to the storage space (5) can be reduced without reducing the flow rate of the gas supplied to the storage space (5).

As described above, when the controller (110) of the present embodiment performs the second control mode, the increase in the carbon dioxide concentration of the inside air can be suppressed by maintaining the flow rate of the gas supplied to the storage space (5), and at the same time, the oxygen concentration of the inside air can be prevented from excessively increasing by reducing the amount of oxygen supplied to the storage space (5). As a result, it is possible to extend the time during which the oxygen concentration and the carbon dioxide concentration of the inside air are kept within the respective allowable ranges, and it is possible to keep freshness of fruits and vegetables stored in the storage space (5) for a long period of time.

In particular, in the second control mode, the controller (110) of the present embodiment increases the supply air flow rate of the ventilation apparatus (40) when the oxygen concentration of the inside air decreases (see steps ST7 and ST8 in FIG. 10), and decreases the supply air flow rate of the ventilation apparatus (40) when the rising speed of the oxygen concentration of the inside air is too high (see steps ST9 and ST10 in FIG. 10). Therefore, it is possible to prevent a decrease in oxygen concentration of the inside air and prevent an excessive increase in oxygen concentration of the inside air, and at the same time, it is possible to suppress an increase in carbon dioxide of the inside air.

### -Variations of Embodiment-

The following variation may be applied to the air composition adjustment apparatus (90) of the embodiment. The following variations may be combined or replaced as necessary as long as the functions of the air composition adjustment apparatus (90) are not impaired.

### <First Variation>

The ventilation apparatus (40) of the embodiment may be configured to adjust a flow rate (supply air flow rate) of the outside air supplied to the storage space (5) and a flow rate (exhaust air flow rate) of the inside air discharged to the external space (6) by adjusting a rotational speed of the internal fan (35). In the present variation, the controller (110) increases the supply air flow rate and the exhaust air flow rate of the ventilation apparatus (40) by increasing the rotational speed of the internal fan (35). The controller (110) reduces the rotational speed of the internal fan (35) to reduce the supply air flow rate and the exhaust air flow rate of the ventilation apparatus (40).

### <Second Variation>

The air treatment unit (95) of the inside air control apparatus (100) of the embodiment may be configured to separate the outside air (atmosphere) into a nitrogen-enriched gas (first gas) and an oxygen-enriched gas (second gas) using a gas separation membrane. The gas separation membrane has a property that the permeation rate of nitrogen is lower than both the permeation rate of oxygen and the permeation rate of carbon dioxide. Therefore, in the air treatment unit (95) of the present variation, the outside air is separated into the oxygen-enriched gas that has permeated through the gas separation membrane and the nitrogen-enriched gas that has not permeated through the gas separation membrane.

### <Third Variation>

The air composition adjustment apparatus (90) of the embodiment may be installed in a stationary refrigerator or freezer. The air composition adjustment apparatus (90) of the embodiment may be installed in a container for overland transportation by truck, rail, and the like. The air composition adjustment apparatus (90) of the embodiment may be installed in a refrigerating/freezing truck including a vehicle body integrated with a box defining a cargo space. As described above, the storage including the air composition adjustment apparatus (90) of the embodiment is not limited to the transportation container for marine transportation, and may be a transportation container for overland transportation, a box provided in a truck and defining a cargo space, or a stationary refrigerator or freezer.

While the embodiment and variations thereof have been described above, it will be understood that various changes in form and details may be made without departing from the spirit and scope of the claims. The foregoing embodiment and variations thereof may be combined or replaced with each other without deteriorating the intended functions of the present disclosure. The ordinal numbers such as "first," "second," ... in the description and claims are used to distinguish the terms to which these expressions are given, and do not limit the number and order of the terms.

### INDUSTRIAL APPLICABILITY

As described above, the present disclosure is useful for an air composition adjustment apparatus, a refrigeration apparatus, and a storage.

### DESCRIPTION OF REFERENCE CHARACTERS

2: storage
10: refrigeration apparatus
11: refrigerant circuit
35: internal fan
40: ventilation apparatus (air supply unit)
41a: air supply communication port (air introduction port)
90: air composition adjustment apparatus
95: air treatment unit
100: inside air control apparatus (composition adjustment unit)
110: controller
160: sensor unit (detector)
161: oxygen sensor
162: carbon dioxide sensor

## Claims

1. An air composition adjustment apparatus (90) that adjusts a composition of inside air inside a storage (2), the air composition adjustment apparatus comprising:
a composition adjustment unit (100) that generates a treated gas having a composition different from a composition of outside air by treating the outside air, and supplies the treated gas to the storage (2);
an air supply unit (40) that supplies the outside air to the storage (2); and
a controller (110) that controls the composition adjustment unit (100) and the air supply unit (40),
wherein the controller (110) performs a dual-operation mode in which the air supply unit (40) supplies the outside air to the storage (2) and the composition adjustment unit (100) supplies the treated gas to the storage (2).

2. The air composition adjustment apparatus according to claim 1, wherein
the treated gas generated by the composition adjustment unit (100) contains a low oxygen concentration gas having an oxygen concentration lower than an oxygen concentration of the outside air, and
the controller (110) causes the composition adjustment unit (100) to supply the low oxygen concentration gas to the storage (2) in the dual-operation mode.

3. The air composition adjustment apparatus according to claim 1 or 2, further comprising a detector (160) that detects a concentration of one or more components of the inside air,
wherein the controller (110)
performs a single-operation mode in which the controller (110) controls an operation of the composition adjustment unit (100) based on a value detected by the detector (160) in a state where supply of the outside air to the storage (2) by the air supply unit (40) is stopped, and
switches between the single-operation mode and the dual-operation mode based on a detection value of the detector (160).

4. The air composition adjustment apparatus according to claim 3, wherein
the detector (160) includes an oxygen sensor (161) that detects an oxygen concentration of the inside air and a carbon dioxide sensor (162) that detects a carbon dioxide concentration of the inside air, and
the controller (110) ends the single-operation mode and executes the dual-operation mode when a detection value of the oxygen sensor (161) is lower than a first predetermined value and a detection value of the carbon dioxide sensor (162) is higher than a second predetermined value during execution of the single-operation mode.

5. The air composition adjustment apparatus according to claim 4, wherein
the air supply unit (40) is capable of changing a flow rate of the outside air supplied to the storage (2), and
the controller (110) increases the flow rate of the outside air supplied to the storage (2) by the air supply unit (40) when the detection value of the oxygen sensor (161) decreases during execution of the dual-operation mode.

6. The air composition adjustment apparatus according to claim 4, wherein
the air supply unit (40) is capable of changing the flow rate of the outside air supplied to the storage (2), and
the controller (110) reduces the flow rate of the outside air supplied to the storage (2) by the air supply unit (40) when a rising speed of the detection value of the oxygen sensor (161) is higher than a third predetermined value during execution of the dual-operation mode.

7. The air composition adjustment apparatus according to any one of claims 4 to 6, wherein
when the detection value of the oxygen sensor (161) is higher than a fourth predetermined value or when the detection value of the carbon dioxide sensor (162) is lower than a fifth predetermined value during execution of the dual-operation mode, the controller (110) ends the dual-operation mode and executes the single-operation mode, and
the fourth predetermined value is higher than the first predetermined value, and the fifth predetermined value is lower than the second predetermined value.

8. The air composition adjustment apparatus according to claim 5 or 6, wherein
the air supply unit (40) includes an air introduction port (41a) having a variable opening degree through which outside of the storage (2) communicates with inside of the storage (2), and
the controller (110)
increases the flow rate of the outside air supplied to the storage (2) by the air supply unit (40) by increasing an opening degree of the air introduction port (41a); and
reduces the flow rate of the outside air supplied to the storage (2) by the air supply unit (40) by reducing the opening degree of the air introduction port (41a).

9. The air composition adjustment apparatus according to claim 5 or 6, wherein
the air supply unit (40) includes
an internal fan (35) that circulates the inside air inside the storage (2), and an air introduction port (41a) that allows communication between outside of the storage (2) and a suction-side region of the internal fan (35) inside the storage (2), and
the controller (110)
increases the flow rate of the outside air supplied to the storage (2) by the air supply unit (40) by increasing a rotational speed of the internal fan (35), and
reduces the flow rate of the outside air supplied to the storage (2) by the air supply unit (40) by reducing the rotational speed of the internal fan (35).

10. The air composition adjustment apparatus according to any one of claims 3 to 9, wherein
the composition adjustment unit (100) is capable of executing an adjustment operation of supplying the treated gas to the storage (2) and an air introduction operation of supplying the outside air to the storage (2), and
in the single-operation mode, the controller (110) switches a state in which the composition adjustment unit (100) performs the adjustment operation, a state in which the composition adjustment unit (100) performs the air introduction operation, and a state in which the composition adjustment unit (100) pauses without performing the adjustment operation and the air introduction operation based on a value detected by the detector (160).

11. The air composition adjustment apparatus according to claim 3, wherein
the detector (160) includes an oxygen sensor (161) that detects an oxygen concentration of the inside air,
the controller (110) is capable of executing:
an oxygen concentration reduction mode in which the controller (110) controls an operation of the composition adjustment unit (100) so that a detection value of the oxygen sensor (161) decreases from the oxygen concentration of the outside air to a sixth predetermined value in a state where the supply of the outside air to the storage (2) by the air supply unit (40) is stopped; and
a composition maintenance mode in which the controller (110) controls operations of the composition adjustment unit (100) and the air supply unit (40) in order to maintain the composition of the inside air after an end of the oxygen concentration reduction mode, and
the controller (110) performs the dual-operation mode during execution of the composition maintenance mode.

12. The air composition adjustment apparatus according to claim 1, wherein
the treated gas includes a first gas having a higher nitrogen concentration and a lower oxygen concentration than the outside air and a second gas having a lower nitrogen concentration and a higher oxygen concentration than the outside air, and
the composition adjustment unit (100) includes an air treatment unit (95) that separates the outside air into the first gas and the second gas.

13. The air composition adjustment apparatus according to claim 12, wherein
the air treatment unit (95) of the composition adjustment unit (100) includes an adsorbent that adsorbs nitrogen, and
the composition adjustment unit (100) performs an operation of generating the second gas by adsorbing nitrogen contained in the outside air to the adsorbent of the air treatment unit (95) and an operation of generating the first gas by desorbing nitrogen from the adsorbent of the air treatment unit (95).

14. A refrigeration apparatus comprising:
the air composition adjustment apparatus (90) according to any one of claims 1 to 13; and
a refrigerant circuit (11) that performs a refrigeration cycle to adjust a temperature of the inside air.

15. A storage comprising the refrigeration apparatus (10) according to claim 14.
